# EUROPEAN PATENT SPECIFICATION

(11) **EP 4 127 454 B1**
(45) Date of publication and mention of the grant of the patent: **31.12.2025**
(21) Application number: 21712980.8
(22) Date of filing: 15.03.2021
(51) Int. Cl.: F03D 1/06, B29C 65/48, B29C 65/78, B29D 99/00, B29L 31/08

(54) **METHOD OF MANUFACTURING A WIND TURBINE BLADE AND SHEAR WEB ASSEMBLY FOR A WIND TURBINE BLADE**
VERFAHREN ZUR HERSTELLUNG EINER WINDTURBINENSCHAUFEL UND SCHERSTEGANORDNUNG FÜR EINE WINDTURBINENSCHAUFEL
PROCÉDÉ DE FABRICATION D'UN ENSEMBLE PALE D'ÉOLIENNE ET ÂME DE CISAILLEMENT POUR PALE D'ÉOLIENNE

(30) Priority: 26.03.2020 GB 202004377
(43) Date of publication of application: 08.02.2023
(73) Proprietor: LM Wind Power A/S, 6000 Kolding (DK)
(72) Inventor: ZHURAVLOV, Pavel, 1703 DH Heerhugowaard (NL); AABJERG, Mia, 6000 Kolding (DK)
(74) Representative: COPA Copenhagen Patents
(86) International application number: PCT/EP2021/056494
(87) International publication number: WO 2021/190973

(56) References cited:
- EP-A2- 2 261 501
- EP-B1- 2 261 501
- WO-A1-2017/045690
- WO-A1-2018/130257
- WO-A1-2018/184644

## Description

### Field of the Invention

The present invention relates to a method of manufacturing a wind turbine blade which involves arranging one or more shear webs within the blade shell. The present invention also relates to a shear web assembly for a wind turbine blade.

### Background of the Invention

Wind power provides a clean and environmentally friendly source of energy. Modern wind turbines usually comprise a tower, generator, gearbox, nacelle, and one or more rotor blades. The wind turbine blades capture kinetic energy of wind using known foil principles. Modern wind turbines may have rotor blades that exceed 90 meters in length.

Wind turbine blades are usually manufactured by forming two shell parts from layers of woven fabric and resin. Spar caps or main laminates are placed or integrated in the shell parts and are combined with shear webs to form a structural support member. Spar caps or main laminates may be joined to, or integrated within, the inside of the suction and pressure halves of the shell. The shear webs and spar caps or main laminates typically extend spanwise along the inside of the blade and are often I-shaped. An additional trailing edge shear web may also be incorporated into the blade.

The main laminates typically comprise a high number of fibre layers compared to the remainder of the blade and may form a local thickening of the wind turbine shell, at least with respect to the number of fibre layers. Thus, the main laminate may form a fibre insertion in the blade. In this design, the main laminates constitute the load carrying structure. The blade shells are typically designed with a first main laminate integrated in the pressure side shell part and a second main laminate integrated in the suction side shell part. The first main laminate and the second main laminate are typically connected via one or more shear webs, which for instance may have a C-shaped or I-shaped cross-section. For very long blades, the blade shells may further along at least a part of the longitudinal extent comprise an additional first main laminate in the pressure side shell, and an additional second main laminate in the suction side shell. These additional main laminates may also be connected via one or more shear webs. This design has the advantage that it is easier to control the aerodynamic shape of the blade via the moulding of the blade shell part.

The shear webs act to reinforce the blade structure and prevent excessive bending or buckling. Some blade designs use shear webs formed from beam members having I- or C-shaped cross-sections, the members having a main body with load-bearing flanges extending therefrom at opposed ends of the main body.

As the size of wind turbines increases, the manufacturing and assembly of blade parts, such as the shell body and shear webs, becomes more challenging and costly. During a typical blade manufacturing process, one or more shear webs are bonded to the inner surfaces of the two shell halves, wherein the shear webs have to be lifted into one of the shell halves and positioned with their lower mounting flanges on top of the spar cap or main laminate, wherein usually an adhesive is applied between the main laminate and the lower mounting flange. In this process, shear webs need to be supported during arrangement and bonding, for example by joining the main shear web to an auxiliary shear web, and by using various support structures.

WO 2017/045690 A1 relates to a positioning jig for manufacturing a wind turbine blade wherein the positioning jig is secured to a shear web prior to its introduction into a blade shell half. A reference surface of the positioning jig engages with a locating surface on the outside of the blade mould for placing the positioning jig into its guide position with the shear web.

WO 2018/184644 A1 discloses a method of assembling two half shells of a wind turbine blade in respective mould halves, and arranging one of the half shells on top of the other half shell with a shear web arranged between the two half shells. During the join-up process, the shear web is supported by stabilisers, wherein stabilisers attached to an inboard end of the shear web may remain accessible after the join-up and can be removed.

These and other known solutions employ jigs or support frames attached to the shear webs, which are lowered into the blade mould together with the shear webs to provide lateral support once the lifting rail is removed. Typically, additional supports need to be installed manually before or after the lifting rail is removed. This may result in a tedious process with several steps, as well as necessitating multiple parts which are attached to the shear web. Also, the support frames installed on the shear webs are usually rather expensive and complex, and require time-intensive installation on the shear webs.

It is therefore an object of the present invention to provide a method of manufacturing a wind turbine blade with an easier and more cost-efficient arrangement of shear webs within the blade shell.

It is another object of the present invention to provide a method of manufacturing a wind turbine blade which is flexible and allows for effective adjustment to different sizes and types of blades and shear webs.

### Summary of the invention

It has been found that one or more of the aforementioned objects can be obtained by a method of manufacturing a wind turbine blade, the blade having a profiled contour including a pressure side and a suction side, and a leading edge and a trailing edge with a chord having a chord length extending therebetween, the wind turbine blade extending in a spanwise direction between a root end and a tip end, the method comprising the steps of:
forming a first shell half and a second shell half, each shell half comprising an aerodynamic outside surface and an opposing inside surface,
arranging one or more shear webs within the first shell half, wherein each shear web comprises two opposing lateral surfaces extending in a spanwise direction,
adhesively joining the one or more shear webs to the first shell half, and
adhesively joining the second shell half to the first shell half and to the one or more shear webs,
wherein the step of arranging the one or more shear webs within the first shell half comprises
fixing at least one support frame to one or more anchoring points on the inside surface of the first shell half, the support frame comprising a free end for engaging with a lateral surface of the shear web,
fastening at least one guide element to at least one of the lateral surfaces of the shear web such that the guide element extends laterally from the shear web to form a receiving space between the guide element and the shear web, and
lowering the one or more shear webs into the first shell half such that the free end of the support frame is received in the receiving space between the guide element and the shear web.

It was found that this method provides a surprisingly simply and light-weight shear web assembly, which greatly reduces the complexity and number of parts that need to be attached to the shear webs prior to lowering them into the shell half. This solution is not only more cost-efficient, but also provides a high degree of flexibility as the guide elements can be combined with a wide range of shear webs of different type and sizes. This arrangement was also found to reduce the load on the lifting device used for lowering the shear webs in the blade half. In addition, accessibility is improved since any adjustments are limited to the support frame which can be placed relatively close to the trailing and leading edges, respectively. This is because the guide elements and the resulting receiving space guide the correct placement of the webs during the lowering step without any manual involvement at the location of the shear web.

The blade shell halves will typically be made of a fibre-reinforced polymer material, usually comprising glass and/or carbon fibres, as well as sandwich material. The shell halves will usually be manufactured in blade moulds using fibre lay-up and resin infusion methods, such as VARTM.

Usually, at least two shear webs will be arranged within the first shell half, such as a forward shear web, which is closer to the leading edge, and an aft shear web, which is closer to the trailing edge. In a preferred embodiment, a first shear web and a second shear web are arranged within the first shell half, the first and second shear web being releasably interconnected, preferably by a truss placed in between the first and second shear web.

In a preferred embodiment, the at least one support frame and/or the truss is removed after adhesively joining the second shell half to the first shell half and to the one or more shear webs. It is particularly preferred that the first and second shear web are releasably interconnected, preferably by a truss placed in between the first and second shear web, wherein the interconnection is between the first lateral surface, e.g. a left lateral surface, of the first shear web and the first lateral surface, e.g. a right lateral surface, of the second shear web, wherein the respective first lateral surfaces of the respective shear webs face each other. It is further preferred that in such embodiments that at least one guide element is fastened to the second lateral surface, e.g. a right lateral surface, of the first shear web, and that at least one guide element is fastened to the second lateral surface, e.g. a left lateral surface, of the second shear web, wherein the respective second lateral surfaces of the respective shear webs face away from each other. It is particularly preferred that in such embodiments three or more guide elements are fastened to the second lateral surface, e.g. a right lateral surface, of the first shear web, and that three or more guide elements are fastened to the second lateral surface, e.g. a left lateral surface, of the second shear web, wherein the respective second lateral surfaces of the respective shear webs face away from each other. It is particularly preferred that the respective three or more guide elements are arranged successively on each second later surface in a spanwise direction.

In other embodiments, three shear webs are arranged within the first shell half. In other embodiments, the shear webs are part of a box spar. In some embodiments, the first shell half is the suction side shell half. In other embodiments, the first shell half is the pressure side shell half.

The opposing lateral surfaces of the shear web are usually the main and largest surface of the shear web. When placed within the shell, one of the two lateral surfaces will usually face towards the leading edge, whereas the opposing lateral surface will usually face towards the trailing edge of the blade. The lateral surface usually lies in a substantially vertical plane including the longitudinal axis or spanwise extent of the shear web. Thus, the two opposing lateral surfaces of the shear web usually extend parallel to the spanwise direction, when the shear is installed within the blade. The opposing lateral surfaces of the shear web can also be expressed as a left lateral surface and a right lateral surface as seen from the root end of blade looking towards the tip end of the blade.

The shear webs of the present invention can be substantially I-shaped. Alternatively, the shear webs may be substantially C-shaped. Each shear web will typically comprise a core member which will usually comprise a foamed polymer and/or balsa wood. The shear webs may also comprise web skins that will typically comprise glass fibres, aramid fibres, carbon fibres or combinations thereof. Preferably, the web skins comprise, or consists of, glass fibres. Typically, the shear web is an elongated element. The shear web body is usually an elongated body that - when mounted in the wind turbine blade shell - extends in the longitudinal or spanwise direction of the wind turbine blade.

It is preferred that the shear webs are arranged substantially parallel to the longitudinal axis of the shell body, i.e. substantially along a spanwise direction. The shear webs will typically be manufactured using a shear web mould system comprising a central moulding portion for forming at least a part of the web body, a first moulding plate for forming at least a part of the first web foot flange, and a second moulding plate for forming at least a part of the second web foot flange. It is preferred that the shear webs of the present invention are manufactured via a Vacuum Assisted Resin Transfer Moulding (VARTM) process. Alternatively, an RTM process could be used, wherein resin is injected into the mould cavity by use of over-pressure.

The steps of adhesively joining the one or more shear webs to the first shell half, and adhesively joining the second shell half to the first shell half and to the one or more shear webs will usually comprise providing adhesive between a web foot or mounting flange of the shear web(s) and the inside surface of the first shell half for bonding the shear web(s) to the first shell half. Subsequently adhesive can be provided between an opposing web foot or mounting flange of the shear web(s) and the inside surface of the second shell half, wherein the parts are joined together by arranging the second shell half on top of the first shell half whilst simultaneously bonding the shear web(s) to the second shell halves.

The pressure side shell half and the suction side shell half will typically be adhered or bonded to each other near the leading edge and near the trailing edge. The shell body may comprise longitudinally/spanwise extending load carrying structures, such as one or more main laminates or spar caps. Advantageously, the shear web is arranged along such main laminate or spar cap.

Load carrying structures such as main laminates are typically formed as fibre insertions comprising a plurality of fibre reinforcement layers, for example, between 20 and 50 layers. In a preferred embodiment, the blade comprises spar caps provided along the respective first and second shell halves. On each side of the load carrying structure, the blade typically comprises a sandwich structure with a core material, such as balsa wood or foamed polymer, and with an inner and outer skin made of fibre reinforced polymer. The shell body is typically made of a fibre reinforced polymer material. The reinforcement fibres may for instance be glass fibres, carbon fibres, aramid fibres, metallic fibres, such as steel fibres, or plant fibres, whereas the polymer for instance may be epoxy, polyester or vinyl ester.

In a preferred embodiment, each shear web comprises a web body, a first web foot flange at a first end of the web body, and a second web foot flange at a second end of the web body, wherein the two opposing lateral surfaces of the shear web are formed by the web body. According to another embodiment, the web body comprises a first web skin and a second web skin, each web skin comprising one or more fibre layers, and a core member sandwiched in between the first and second web skins.

The step of arranging the one or more shear webs within the first shell half comprises fixing at least one support frame to one or more anchoring points on the inside surface of the first shell half, the support frame comprising a free end for engaging with a lateral surface of the shear web. In a preferred embodiment, each support frame is fixed to at least two anchoring points on the inside surface of the first shell half. In a particularly preferred embodiment, the at least one support frame remains fixed to the one or more anchoring points on the inside surface of the first shell half during the step of adhesively joining the second shell half to the first shell half and to the one or more shear webs.

Typically, the support frame comprises a free distal end for engaging with a lateral surface of the shear web, and one or more proximal ends that are fixed to the one or more anchoring points, preferably such that each proximal end is fixed to one anchoring point. In this context, the terms distal and proximal are as seen from the inside surface of the first shell half towards the lateral surface of the shear web, i.e. the distal end being further apart from the inside surface of the first shell half than the proximal end.

In a preferred embodiment, the support frame comprises a spring suspension device. This can advantageously accommodate for adhesive being squeezed out during the joining process, as well as for intolerances and adjustments with respect to the length and height of the support frame and the shear web. In a preferred embodiment, the support frame is adjustable for varying the position of its free end for engaging with the shear web.

It is preferred that the anchoring points are located in the vicinity of the respective leading and trailing edges. In a preferred embodiment, the anchoring points on the inside surface of the first shell half are located within less than 20% chordal distance, such as less than 10% chordal distance, from either the leading edge or the trailing edge of the first shell half. In a preferred embodiment, the one or more anchoring points on the inside surface of the first shell half comprise a polymer anchor glued to the inside surface of the first shell half, the polymer anchor comprising a loop for receiving a mating pin of the support frame. As used herein, the term "chordal distance" refers to a distance measure along, i.e. parallel to, the blade chord at any given spanwise location. For example, 20% chordal distance refers to a distance, e.g. measured from the leading edge, along the chord, which extends 20% towards the opposing edge, e.g. the trailing edge, relative to the total chord length at that spanwise position.

In some embodiments, the anchoring points on the inside surface of the first shell half are located within 2 m, such within 1 m, chordal distance from the leading edge, and within 2 m, such within 1 m, chordal distance from the trailing edge.

In some embodiments, 2-4 anchoring points are used per support frame. The support frame may comprise a plurality of interconnected, bar-shaped elements, which advantageously are adjustable in length. In a preferred embodiment, each anchoring point on the inside surface of the first shell half comprises one or more brackets.

At least one guide element, preferably a plurality of guide elements, are fastened to at least one of the lateral surfaces of the shear web such that the guide element(s) extend laterally from the shear web to form a receiving space between the guide element and the shear web. In some embodiments, the guide element is a guide plate. The guide plate can be part of a bracket or angular element. In some embodiments, the guide plate has a length of 25-250 mm and a width of 2-200 mm. In other preferred embodiments, the guide element is a guide rail. In other preferred embodiments, the guide element is a guide shoulder. In other preferred embodiments, the guide element is a guide tooth.

Preferably, each guide element is located within a mid-portion of the shear web, the mid-portion extending between 10-90%, preferably between 20-80%, of the vertical extent, i.e. in the flapwise extent, of the shear web at the given spanwise location along the shear web. It was found that the stability of the arrangement is improved if the guide elements are installed at such height. In some embodiments, each guide element is installed at the approximate same flapwise height. In a particularly preferred embodiment, each guide element is located above the centre of gravity of the shear web, as seen in the flapwise direction.

It is preferred that the guide element forms an acute angle with the lateral surface of the shear web. In some embodiments, the acute angle is between 10 and 60°, such as between 10 and 45°. The guide element will typically point downwards toward the inside surface of the first blade half. These configurations allow for an improved guidance and fit with the free end of the support frame when lowering the web assembly into the first blade half.

In a preferred embodiment, the receiving space between the guide element and the shear web is an angular receiving space tapering towards the shear web. Similarly, the free end of the support member may taper towards its end to match the tapering receiving space between the lateral surface of the shear web and the guide element. According to one embodiment, the guide element comprises a locking member for locking the guide element to the free end of the support frame. Preferably, the guide element has a spanwise extent of 25-250 mm, preferably 50-100 mm.

The guide element can advantageously be made of a polymer material, preferably acrylonitrile butadiene styrene (ABS). It is generally preferred that the guide element is a light-weight component. In a preferred embodiment, the guide element weighs 5 kg or less, preferably 2 kg or less. In a preferred embodiment, the guide element has a total weight of less than 10%, preferably less than 5%, most preferably less than 1%, relative to the weight of the shear web.

Advantageously, the guide element extends laterally from the shear web at an angle. It is particularly preferred that the guide element extends laterally from the shear web within a chordal distance of 5-200 mm, preferably 5-100 mm. In some embodiments, the chordal distance between the lateral surface of the shear web and the distal end of the guide element is 250 mm or less. It preferred that the guide element extends laterally from the shear web within a chordal distance less than 10% of the chord length.

In a preferred embodiment, the step of fastening at least one guide element to at least one of the lateral surfaces of the shear web comprises fastening 2-10, preferably 4-6, guide elements to at least one of the lateral surfaces of the shear web, the guide elements being successively arranged in the spanwise direction. The number of support frames will usually match the number of guide elements. It is thus preferred, that a plurality of guide elements is fastened to each shear web. It is also preferred that a plurality of support frames are fixed to the inside surface of the first blade half. In other embodiments, the guide element extends along substantially the entire spanwise extent of the shear web.

In a preferred embodiment, the guide element is fastened to the shear web via a bolted connection. In a preferred embodiment, the bolted connection extends through the shear web, i.e. between the two opposing lateral surfaces of the shear web. Thus, each guide element may be fastened to a respective bolt extending through the shear between the opposing lateral surfaces thereof.

The one or more shear webs are lowered into the first shell half such that the free end of the support frame is received in the receiving space between the guide element and the shear web. Typically, the one or more shear webs are lowered until the shear web rests on the inside of the first blade half, preferably on a main laminate or spar cap portion thereof. Advantageously, the free end of the support frame may contact the lateral surface during the lowering step and subsequently slide upwards along the lateral surface as the shear web is further lowered to its final position. This step will typically be carried out using a lifting device or a crane device, e.g. comprising a lifting rail.

The free end of support frame can be a free end of a bar shaped element of the support frame, such a distal end of a bar, such as a rounded distal end of a bar. In a preferred embodiment, the free end of the support frame is a rounded end for being slidably received in the receiving space between the guide element and the shear web. In another preferred embodiment, the free end of the support frame comprises a guiding pin matching the shape of the receiving space between the guide element and the shear web.

In another aspect, the present invention relates to a shear web assembly for a wind turbine blade, the blade having a profiled contour including a pressure side and a suction side, and a leading edge and a trailing edge with a chord having a chord length extending therebetween, the wind turbine blade extending in a spanwise direction between a root end and a tip end, the shear web assembly comprising:
one or more shear webs, each shear web comprising two opposing lateral surfaces extending in a spanwise direction,
at least one guide element fastened to at least one of the lateral surfaces of the shear web such that the guide element extends laterally from the shear web to form a receiving space between the guide element and the shear web,
wherein the guide element has a total weight of less than 10%, preferably less than 5%, most preferably less than 1%, relative to the weight of the shear web.

Preferably, the shear web assembly comprises at least two shear webs, such as a forward shear web, which is closer to the leading edge, and an aft shear web, which is closer to the trailing edge, when installed within the blade. In a preferred embodiment, the shear web assembly comprises a first shear web and a second shear web, the first and second shear web being releasably interconnected, preferably by a truss placed in between the first and second shear web. It is particularly preferred that the first and second shear web are releasably interconnected, preferably by a truss placed in between the first and second shear web, wherein the interconnection is between the first lateral surface, e.g. a left lateral surface, of the first shear web and the first lateral surface, e.g. a right lateral surface, of the second shear web, wherein the respective first lateral surfaces of the respective shear webs face each other. It is further preferred that in such embodiments that at least one guide element is fastened to the second lateral surface, e.g. a right lateral surface, of the first shear web, and that at least one guide element is fastened to the second lateral surface, e.g. a left lateral surface, of the second shear web, wherein the respective second lateral surfaces of the respective shear webs face away from each other.

It is particularly preferred that in such embodiments three or more guide elements are fastened to the second lateral surface, e.g. a right lateral surface, of the first shear web, and that three or more guide elements are fastened to the second lateral surface, e.g. a left lateral surface, of the second shear web, wherein the respective second lateral surfaces of the respective shear webs face away from each other. It is particularly preferred that the respective three or more guide elements are arranged successively on each second later surface in a spanwise direction.

In a preferred embodiment, the shear web assembly comprises 2-10, preferably 4-6, guide elements fastened to at least one of the lateral surfaces of the shear web, the guide elements being successively arranged in the spanwise direction.

All features and/or embodiments discussed above with respect to the method of the present invention, such as the number or design of the guide elements, likewise apply to the shear web assembly according to the present invention.

As used herein, the term "spanwise" is used to describe the orientation of a measurement or element along the blade from its root end to its tip end. The term "chord-wise" is used to describe the orientation of an element or measurement along the blade from its leading edge to its trailing edge.

### Description of the Invention

The invention is explained in detail below with reference to an embodiment shown in the drawings, in which
Fig. 1 shows a wind turbine,
Fig. 2 shows a schematic view of a wind turbine blade,
Fig. 3 shows a schematic view of a cross-section of a wind turbine blade,
Fig. 4 is a perspective cut-open view of a wind turbine blade with a shear web,
Fig. 5 is a schematic illustration of an arrangement of a shear web assembly in a blade half at a first stage,
Fig. 6 is a schematic illustration of an arrangement of a shear web assembly in a blade half at a second stage, and
Fig. 7 is an enlarged view of the encircled area in Fig. 6.

### Detailed Description

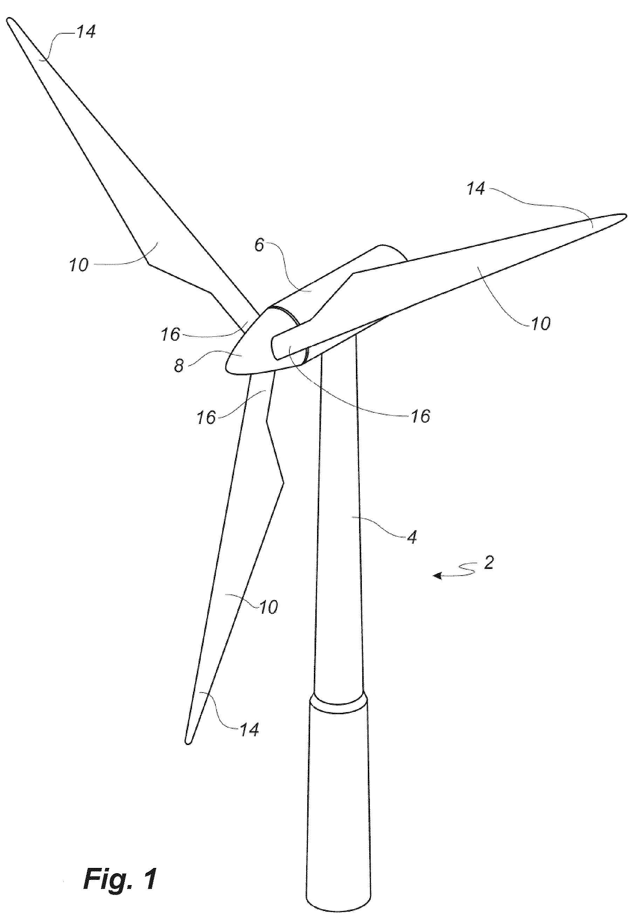

Fig. 1 illustrates a conventional modern upwind wind turbine according to the so-called "Danish concept" with a tower 4, a nacelle 6 and a rotor with a substantially horizontal rotor shaft. The rotor includes a hub 8 and three blades 10 extending radially from the hub 8, each having a blade root 16 nearest the hub and a blade tip 14 farthest from the hub 8. The rotor has a radius denoted R.

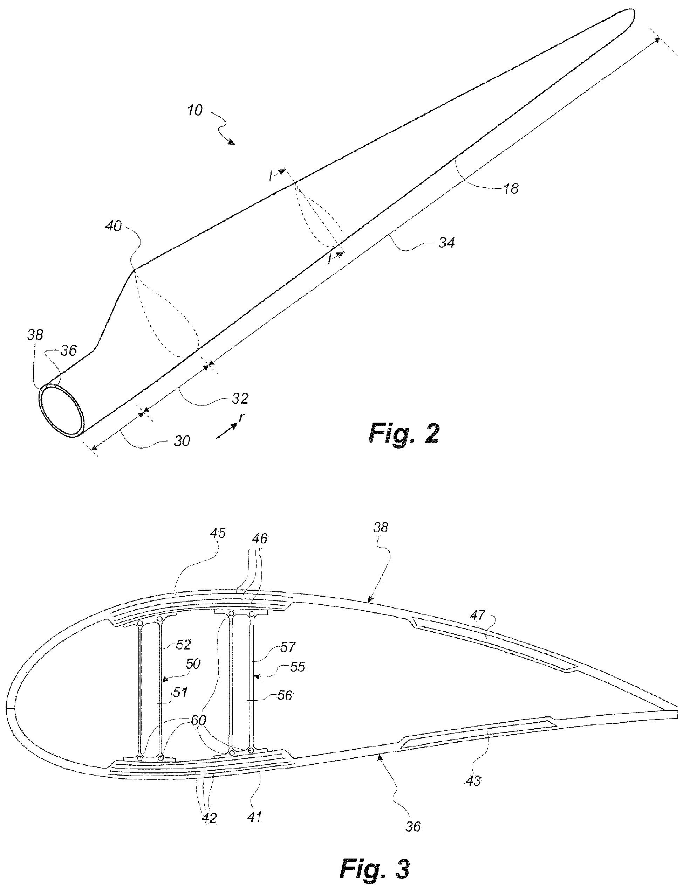

Fig. 2 shows a schematic view of a wind turbine blade 10. The wind turbine blade 10 has the shape of a conventional wind turbine blade and comprises a root region 30 closest to the hub, a profiled or an airfoil region 34 farthest away from the hub and a transition region 32 between the root region 30 and the airfoil region 34. The blade 10 comprises a leading edge 18 facing the direction of rotation of the blade 10, when the blade is mounted on the hub, and a trailing edge 20 facing the opposite direction of the leading edge 18.

The airfoil region 34 (also called the profiled region) has an ideal or almost ideal blade shape with respect to generating lift, whereas the root region 30 due to structural considerations has a substantially circular or elliptical cross-section, which for instance makes it easier and safer to mount the blade 10 to the hub. The diameter (or the chord) of the root region 30 may be constant along the entire root area 30. The transition region 32 has a transitional profile gradually changing from the circular or elliptical shape of the root region 30 to the airfoil profile of the airfoil region 34. The chord length of the transition region 32 typically increases with increasing distance rfrom the hub. The airfoil region 34 has an airfoil profile with a chord extending between the leading edge 18 and the trailing edge 20 of the blade 10. The width of the chord decreases with increasing distance *r* from the hub.

A shoulder 40 of the blade 10 is defined as the position, where the blade 10 has its largest chord length. The shoulder 40 is typically provided at the boundary between the transition region 32 and the airfoil region 34.

It should be noted that the chords of different sections of the blade normally do not lie in a common plane, since the blade may be twisted and/or curved (i.e. pre-bent), thus providing the chord plane with a correspondingly twisted and/or curved course, this being most often the case in order to compensate for the local velocity of the blade being dependent on the radius from the hub.

The blade is typically made from a pressure side shell part 36 and a suction side shell part 38 that are glued to each other along bond lines at the leading edge 18 and the trailing edge of the blade 20.

Fig. 3 shows a schematic view of a cross section of the blade along the line I-I shown in Fig. 2. As previously mentioned, the blade 10 comprises a pressure side shell part 36 and a suction side shell part 38. The pressure side shell part 36 comprises a spar cap 41, also called a main laminate, which constitutes a load bearing part of the pressure side shell part 36. The spar cap 41 comprises a plurality of fibre layers 42 mainly comprising unidirectional fibres aligned along the longitudinal direction of the blade in order to provide stiffness to the blade. The suction side shell part 38 also comprises a spar cap 45 comprising a plurality of fibre layers 46. The pressure side shell part 38 may also comprise a sandwich core material 43 typically made of balsawood or foamed polymer and sandwiched between a number of fibre-reinforced skin layers. The sandwich core material 43 is used to provide stiffness to the shell in order to ensure that the shell substantially maintains its aerodynamic profile during rotation of the blade. Similarly, the suction side shell part 38 may also comprise a sandwich core material 47.

The spar cap 41 of the pressure side shell part 36 and the spar cap 45 of the suction side shell part 38 are connected via a first shear web 50 and a second shear web 55. The shear webs 50, 55 are in the shown embodiment shaped as substantially I-shaped webs. The first shear web 50 comprises a shear web body and two web foot flanges. The shear web body comprises a sandwich core material 51, such as balsawood or foamed polymer, covered by a number of skin layers 52 made of a number of fibre layers. The second shear web 55 has a similar design with a shear web body and two web foot flanges, the shear web body comprising a sandwich core material 56 covered by a number of skin layers 57 made of a number of fibre layers. The sandwich core material 51, 56 of the two shear webs 50, 55 may be chamfered near the flanges in order to transfer loads from the webs 50, 55 to the main laminates 41, 45 without the risk of failure and fractures in the joints between the shear web body and web foot flange. However, such a design will normally lead to resin rich areas in the joint areas between the legs and the flanges. Further, such resin rich area may comprise burned resin due to high exothermic peeks during the curing process of the resin, which in turn may lead to mechanical weak points.

In order to compensate for this, a number of filler ropes 60 comprising glass fibres are normally arranged at these joint areas. Further, such ropes 60 will also facilitate transferring loads from the skin layers of the shear web body to the flanges. However, according to the invention, alternative constructional designs are possible.

The blade shells 36, 38 may comprise further fibre-reinforcement at the leading edge and the trailing edge. Typically, the shell parts 36, 38 are bonded to each other via glue flanges in which additional filler ropes may be used (not shown). Additionally, very long blades may comprise sectional parts with additional spar caps, which are connected via one or more additional shear webs.

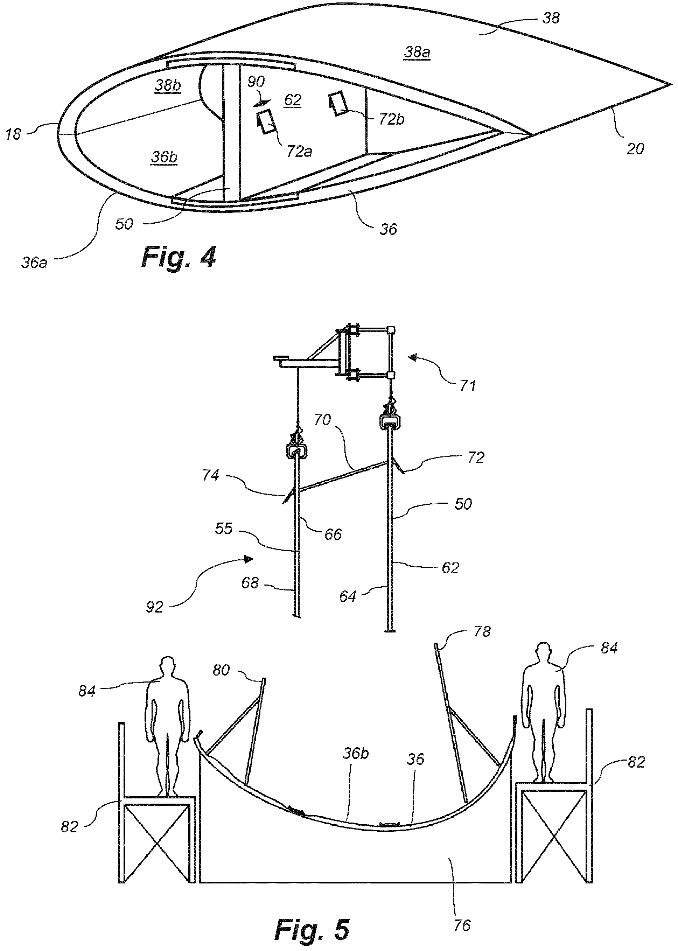

Fig. 4 is a perspective cut-open view of a wind turbine blade with a shear web 50. The blade has a first shell half 36 and a second shell half 38, each shell half comprising an aerodynamic outside surface 36a, 38a and an opposing inside surface 36b, 38b. The shear web 50 comprises lateral surface 62 extending in a spanwise direction. The blade is manufactured by adhesively joining the shear web 50 to the first shell half 36, and adhesively joining the second shell half 38 to the first shell half 36 and to the shear web 50. The shear web 50 comprises two guide elements 72a and 72b on its lateral surface 62, each having a relatively modest spanwise extent 90 of 25-250 mm. It is seen that each guide element 72a, 72b is located within a mid-portion of the vertical extent, i.e. in the flapwise extent, of the shear web at the given spanwise location along the shear web. In the illustrated embodiment each guide element is installed at the approximate same flapwise height.

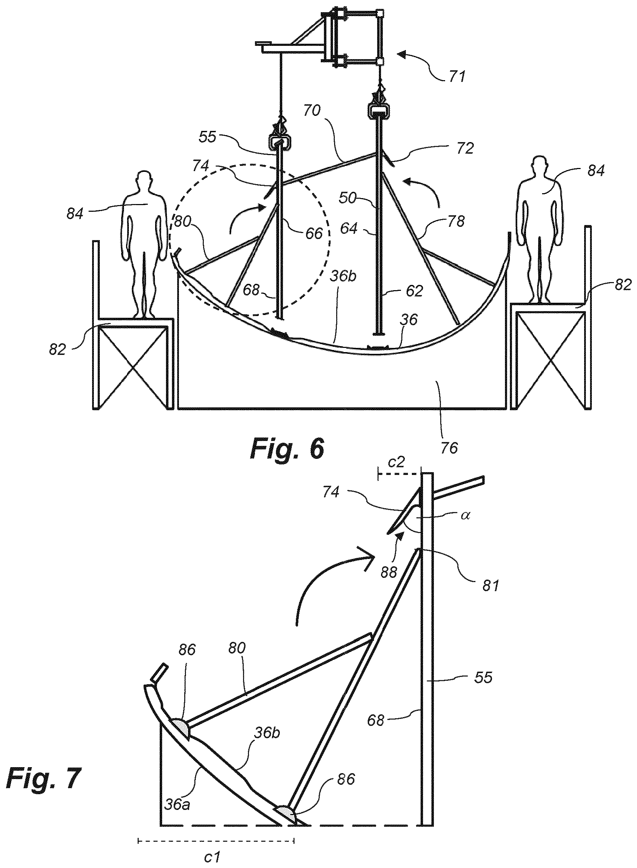

According to the method of manufacturing a wind turbine blade of the present invention, two shear webs 50, 55 can be arranged within the first shell half 36, as illustrated in Figs. 5-7. The shear web 50 comprises two opposing lateral surfaces 62, 64, and the shear web 55 comprises two opposing lateral surfaces 66, 68 extending in a spanwise direction. The step of arranging the shear webs 50, 55 within the first shell half 36 comprises fixing at least support frames 87, 80 to one or more anchoring points 86 on the inside surface 36b of the first shell half 36, as shown in the detailed view of Fig. 7. The anchoring points 86 on the inside surface 36b of the first shell half are located within less than 20% chordal distance c1 from either the leading edge or the trailing edge of the first shell half. This allows easy access by operators 84 standing on scaffold 82 next to the blade mould 76.

Each support frame comprises a free end 81 for engaging with a lateral surface 68 of the shear web 55. Guide elements 72, 74 are fastened to the lateral surfaces 62, 68 of the respective shear webs 50, 55 such that the guide elements 72, 74 extend laterally from the shear webs 50, 55. This forms a receiving space 88 between the guide element 74 and the shear web 55, as shown in the detailed view of Fig. 7. The same applies to the other shear web 50. As best seen in Fig. 7, guide element 74 forms an acute angle α with the lateral surface 68 of the shear web 55. Also, the guide element 74 extends laterally from the shear web 55 within a chordal distance c2 of 5-200 mm.

As seen in Figs. 5 and 6, the first and second shear webs 50, 55 are releasably interconnected by a truss 70 placed in between the first and second shear webs 50, 55. The shear web assembly 92 is lowered into the first shell half 36 such that the free end 81 of the support frame 80 is received in the receiving space 88 between the guide element 74 and the shear web 55. The same applies to shear web 50. Fig. 6 illustrates a stage wherein the shear web assembly has almost been lowered to its final position, wherein the flanges of the shear webs contact the inside surface 36b of the shell half. As seen in Fig. 7, the free end 81 of support frame 80 is a rounded end for being slidably received in the receiving space 88 between the guide element 74 and the shear web 55. The support frames 78, 80 and the truss 70 are removed after adhesively joining the second shell half to the first shell half and to the one or more shear webs.

The invention is not limited to the embodiments described herein, and may be modified or adapted without departing from the scope of the claims.

### List of reference numerals

- 4: tower
- 6: nacelle
- 8: hub
- 10: blades
- 14: blade tip
- 16: blade root
- 18: leading edge
- 20: trailing edge
- 30: root region
- 32: transition region
- 34: airfoil region
- 36: pressure side shell part
- 36a: aerodynamic outside surface
- 36b: inside surface
- 38: suction side shell part
- 38a: aerodynamic outside surface
- 38b: inside surface
- 40: shoulder
- 41: spar cap
- 42: fibre layers
- 43: sandwich core material
- 45: spar cap
- 46: fibre layers
- 47: sandwich core material
- 50: first shear web
- 51: core member
- 52: skin layers
- 55: second shear web
- 56: sandwich core material of second shear web
- 57: skin layers of second shear web
- 60: filler ropes
- 62: right lateral surface of first shear web
- 64: left lateral surface of first shear web
- 66: right lateral surface of second shear web
- 68: left lateral surface of second shear web
- 70: truss
- 71: lifting rail
- 72: guide element
- 74: guide element
- 76: blade mould
- 78: first support frame
- 79: free end of first support frame
- 80: second support frame
- 81: free end of second support frame
- 82: scaffold
- 84: operators
- 86: anchoring points
- 88: receiving space
- 90: spanwise extent of guide element
- 92: shear web assembly
- α: angle
- H: height
- L: length
- r: distance from hub
- R: rotor radius

## Claims

1. A method of manufacturing a wind turbine blade (10), the blade having a profiled contour including a pressure side (36) and a suction side (38), and a leading edge (18) and a trailing edge (20) with a chord having a chord length extending therebetween, the wind turbine blade (10) extending in a spanwise direction between a root end (16) and a tip end (14), the method comprising the steps of:
forming a first shell half (36) and a second shell half (38), each shell half comprising an aerodynamic outside surface (36a, 38a) and an opposing inside surface (36b, 38b),
arranging one or more shear webs (50, 55) within the first shell half, wherein each shear web comprises two opposing lateral surfaces (66, 68) extending in a spanwise direction,
adhesively joining the one or more shear webs to the first shell half, and
adhesively joining the second shell half to the first shell half and to the one or more shear webs,
**characterized in that** the step of arranging the one or more shear webs within the first shell half comprises
fixing at least one support frame (80) to one or more anchoring points (86) on the inside surface (36b) of the first shell half, the support frame comprising a free end (81) for engaging with a lateral surface of the shear web,
fastening at least one guide element (74) to at least one of the lateral surfaces of the shear web such that the guide element extends laterally from the shear web to form a receiving space (88) between the guide element (74) and the shear web (55), and
lowering the one or more shear webs into the first shell half such that the free end (81) of the support frame (80) is received in the receiving space (88) between the guide element (74) and the shear web (55).

2. A method of manufacturing a wind turbine blade according to claim 1, wherein the guide element (74) forms an acute angle (α) with the lateral surface (68) of the shear web.

3. A method of manufacturing a wind turbine blade according to claim 2, wherein the acute angle (α) is between 10 and 60°.

4. A method of manufacturing a wind turbine blade according to any one of the preceding claims, wherein the anchoring points (86) on the inside surface of the first shell half are located within less than 20% chordal distance (c1) from either the leading edge or the trailing edge of the first shell half.

5. A method of manufacturing a wind turbine blade according to any one of the preceding claims, wherein the guide element (72a) has a spanwise extent (90) of 25-250 mm, preferably 50-100 mm.

6. A method of manufacturing a wind turbine blade according to any one of the preceding claims, wherein the step of fastening at least one guide element to at least one of the lateral surfaces of the shear web comprises fastening 2-10, preferably 4-6, guide elements to at least one of the lateral surfaces of the shear web, the guide elements being successively arranged in the spanwise direction.

7. A method of manufacturing a wind turbine blade according to any one of the preceding claims, wherein the free end (81) of the support frame is a rounded end for being slidably received in the receiving space between the guide element and the shear web.

8. A method of manufacturing a wind turbine blade according to any one of the preceding claims, wherein the free end (81) of the support frame comprises a guiding pin matching the shape of the receiving space between the guide element and the shear web.

9. A method of manufacturing a wind turbine blade according to any one of the preceding claims, wherein a first shear web (50) and a second shear web (55) are arranged within the first shell half, the first and second shear web being releasably interconnected by a truss (70) placed in between the first and second shear web.

10. A method of manufacturing a wind turbine blade according to any one of the preceding claims, wherein the at least one support frame (78, 80) and the truss (70) is removed after adhesively joining the second shell half to the first shell half and to the one or more shear webs.

11. A method of manufacturing a wind turbine blade according to any one of the preceding claims, wherein the guide element extends laterally from the shear web within a chordal distance (c2) of 5-200 mm, preferably 5-100 mm.

12. A method of manufacturing a wind turbine blade according to any one of the preceding claims, wherein the guide element has a total weight of less than 10% relative to the weight of the shear web.

13. A method of manufacturing a wind turbine blade according to any one of the preceding claims, wherein the one or more anchoring points on the inside surface of the first shell half comprise a polymer anchor glued to the inside surface of the first shell half, the polymer anchor comprising a loop for receiving a mating pin of the support frame.

14. A shear web assembly (92) for a wind turbine blade, the blade (10) having a profiled contour including a pressure side and a suction side, and a leading edge (18) and a trailing edge (20) with a chord having a chord length extending therebetween, the wind turbine blade (10) extending in a spanwise direction between a root end (16) and a tip end (14), the shear web assembly comprising:
one or more shear webs (50, 55), each shear web comprising two opposing lateral surfaces (66, 68) extending in a spanwise direction, **characterized in that** the shear web assembly further comprises
at least one guide element (72, 74) fastened to at least one of the lateral surfaces of the shear web such that the guide element extends laterally from the shear web to form a receiving space (88) between the guide element and the shear web,
wherein the guide element has a total weight of less than 10% relative to the weight of the shear web.

15. A shear web assembly for a wind turbine blade according to claim 14, comprising 2-10, preferably 4-6, guide elements fastened to at least one of the lateral surfaces of the shear web, the guide elements being successively arranged in the spanwise direction.

## Patentansprüche

1. Verfahren zur Herstellung eines Windkraftanlagenblatts (10), wobei das Blatt einen profilierten Umriss, der eine Druckseite (36) und eine Saugseite (38) beinhaltet, sowie eine Vorderkante (18) und einer Hinterkante (20) mit einer Profilsehne aufweist, die eine Profilsehnenlänge aufweist, die sich dazwischen erstreckt, wobei sich das Windkraftanlagenblatt (10) in einer Spannweitenrichtung zwischen einem Wurzelende (126) und einem Spitzenende (14) erstreckt, wobei das Verfahren die folgenden Schritte umfasst:
Bilden einer ersten Schalenhälfte (36) und einer zweiten Schalenhälfte (38), wobei jede Schalenhälfte eine aerodynamische Außenfläche (36a, 38a) und eine gegenüberliegende Innenfläche (36b, 38b) umfasst,
Anordnen eines oder mehrerer Scherstege (50, 55) in der ersten Schalenhälfte, wobei jeder Schersteg zwei gegenüberliegende Seitenflächen (66, 68) umfasst, die sich in einer Spannweitenrichtung erstrecken,
Ankleben des einen oder der mehreren Scherstege an die erste Schalenhälfte und
Ankleben der zweiten Schalenhälfte an die erste Schalenhälfte und den einen oder die mehreren Scherstege,
**dadurch gekennzeichnet, dass** der Schritt des Anordnens des einen oder der mehreren Scherstege in der ersten Schalenhälfte Folgendes umfasst:
Fixieren mindestens eines Stützrahmens (80) an einem oder mehreren Verankerungspunkten (86) an der Innenfläche (36b) der ersten Schalenhälfte, wobei der Stützrahmen ein freies Ende (81) für den Eingriff mit einer Seitenfläche des Schersteges umfasst,
Befestigen mindestens eines Führungselements (74) an mindestens einer der Seitenflächen des Schersteges derart, dass sich das Führungselement von dem Schersteg aus seitlich erstreckt, um einen Aufnahmeraum (88) zwischen dem Führungselement (74) und dem Schersteg (55) zu bilden, und
Absenken des einen oder der mehreren Scherstege in die erste Schalenhälfte derart, dass das freie Ende (81) des Stützrahmens (80) in den Aufnahmeraum (88) zwischen dem Führungselement (74) und dem Schersteg (55) aufgenommen wird.

2. Verfahren zur Herstellung eines Windkraftanlagenblatts nach Anspruch 1, wobei das Führungselement (74) einen spitzen Winkel (α) mit der Seitenfläche (68) des Scherstegs bildet.

3. Verfahren zur Herstellung eines Windkraftanlagenblatts nach Anspruch 2, wobei der spitze Winkel (α) zwischen 10 und 60° beträgt.

4. Verfahren zur Herstellung eines Windkraftanlagenblatts nach einem der vorhergehenden Ansprüche, wobei sich die Verankerungspunkte (86) an der Innenfläche der ersten Schalenhälfte innerhalb von weniger als 20 % des Abstands (c1) in Profilsehnenrichtung zu entweder der Vorder- oder der Hinterkante der ersten Schalenhälfte befinden.

5. Verfahren zur Herstellung eines Windkraftanlagenblatts nach einem der vorhergehenden Ansprüche, wobei das Führungselement (72a) eine Erstreckung (90) in Spannweitenrichtung von 25 bis 250 mm, vorzugsweise 50 bis 100 mm aufweist.

6. Verfahren zur Herstellung eines Windkraftanlagenblatts nach einem der vorhergehenden Ansprüche, wobei der Schritt des Befestigens mindestens eines Führungselements an mindestens einer der Seitenflächen des Scherstegs das Befestigen von 2 bis 10, vorzugsweise 4 bis 6 Führungselementen an mindestens einer der Seitenflächen des Scherstegs umfasst, wobei die Führungselemente nacheinander in der Spannweitenrichtung angeordnet werden.

7. Verfahren zur Herstellung eines Windkraftanlagenblatts nach einem der vorhergehenden Ansprüche, wobei das freie Ende (81) des Stützrahmens ein abgerundetes Ende für eine gleitende Aufnahme in den Aufnahmeraum zwischen dem Führungselement und dem Schersteg ist.

8. Verfahren zur Herstellung eines Windkraftanlagenblatts nach einem der vorhergehenden Ansprüche, wobei das freie Ende (81) des Stützrahmens einen Führungsstift umfasst, der zur Form des Aufnahmeraums zwischen dem Führungselement und dem Schersteg passt.

9. Verfahren zur Herstellung eines Windkraftanlagenblatts nach einem der vorhergehenden Ansprüche, wobei in der ersten Schalenhälfte ein erster Schersteg (50) und ein zweiter Schersteg (55) angeordnet werden, wobei der erste und der zweite Schersteg durch einen Träger (70) lösbar miteinander verbunden werden, der zwischen dem ersten und dem zweiten Schersteg platziert wird.

10. Verfahren zur Herstellung eines Windkraftanlagenblatts nach einem der vorhergehenden Ansprüche, wobei der mindestens eine Stützrahmen (78, 80) und der Träger (70) nach dem Ankleben der zweiten Schalenhälfte an die erste Schalenhälfte und an den einen oder die mehreren Scherstege entfernt werden.

11. Verfahren zur Herstellung eines Windkraftanlagenblatts nach einem der vorhergehenden Ansprüche, wobei sich das Führungselement von dem Schersteg aus seitlich innerhalb eines Abstands (c2) in Profilsehnenrichtung von 5 bis 200 mm, vorzugsweise 5 bis 100 mm erstreckt.

12. Verfahren zur Herstellung eines Windkraftanlagenblatts nach einem der vorhergehenden Ansprüche, wobei das Führungselement, bezogen auf das Gewicht des Scherstegs, ein Gesamtgewicht von weniger als 10 % aufweist.

13. Verfahren zur Herstellung eines Windkraftanlagenblatts nach einem der vorhergehenden Ansprüche, wobei der eine oder die mehreren Verankerungspunkte an der Innenfläche der ersten Schalenhälfte einen Polymeranker umfassen, der mit der Innenfläche der ersten Schalenhälfte verleimt ist, wobei der Polymeranker eine Schlaufe zur Aufnahme eines passenden Stiftes des Stützrahmens umfasst.

14. Schersteganordnung (92) für ein Windkraftanlagenblatt, wobei das Blatt (10) einen profilierten Umriss, der eine Druckseite und eine Saugseite beinhaltet, sowie eine Vorderkante (18) und einer Hinterkante (20) mit einer Profilsehne aufweist, die eine Profilsehnenlänge aufweist, die sich dazwischen erstreckt, wobei sich das Windkraftanlagenblatt (10) in einer Spannweitenrichtung zwischen einem Wurzelende (16) und einem Spitzenende (14) erstreckt, wobei die Schersteganordnung Folgendes umfasst:
einen oder mehrere Scherstege (50, 55), wobei jeder Schersteg zwei gegenüberliegende Seitenflächen (66, 68) umfasst, die sich in einer Spannweitenrichtung erstrecken, **dadurch gekennzeichnet, dass** die Schersteganordnung ferner Folgendes umfasst:
mindestens ein Führungselement (72, 74), das derart an mindestens einer der Seitenflächen des Scherstegs befestigt ist, dass sich das Führungselement von dem Schersteg aus seitlich erstreckt, um einen Aufnahmeraum (88) zwischen dem Führungselement und dem Schersteg zu bilden,
wobei das Führungselement, bezogen auf das Gewicht des Scherstegs, ein Gesamtgewicht von weniger als 10 % aufweist.

15. Schersteganordnung für ein Windkraftanlagenblatt nach Anspruch 14, umfassend 2 bis 10, vorzugsweise 4 bis 6 Führungselemente, die an mindestens einer der Seitenflächen des Scherstegs befestigt sind, wobei die Führungselemente in der Spannweitenrichtung nacheinander angeordnet sind.

## Revendications

1. Procédé de fabrication d'une pale d'éolienne (10), la pale ayant un contour profilé comprenant un côté en pression (36) et un côté en dépression (38), et un bord d'attaque (18) et un bord de fuite (20) avec une corde ayant une longueur de corde s'étendant entre eux, la pale d'éolienne (10) s'étendant dans une direction allant dans le sens de l'envergure entre une extrémité de pied (16) et une extrémité de bout (14), le procédé comportant les étapes consistant à :
former une première moitié de coque (36) et une deuxième moitié de coque (38), chaque moitié de coque comportant une surface extérieure aérodynamique (36a, 38a) et une surface intérieure opposée (36b, 38b),
agencer une ou plusieurs âmes de cisaillement (50, 55) à l'intérieur de la première moitié de coque, chaque âme de cisaillement comportant deux surfaces latérales opposées (66, 68) s'étendant dans une direction allant dans le sens de l'envergure,
assembler de manière adhésive lesdites une ou plusieurs âmes de cisaillement à la première moitié de coque, et
assembler de manière adhésive la deuxième moitié de coque à la première moitié de coque et auxdites une ou plusieurs âmes de cisaillement,
**caractérisé en ce que** l'étape consistant à agencer lesdites une ou plusieurs âmes de cisaillement à l'intérieur de la première moitié de coque comporte les étapes consistant à
fixer au moins un cadre de support (80) à un ou plusieurs points d'ancrage (86) sur la surface intérieure (36b) de la première moitié de coque, le cadre de support comportant une extrémité libre (81) destinée à venir se mettre en prise avec une surface latérale de l'âme de cisaillement,
attacher au moins un élément de guidage (74) sur au moins l'une des surfaces latérales de l'âme de cisaillement, de telle sorte que l'élément de guidage s'étend latéralement à partir de l'âme de cisaillement pour former un espace de réception (88) entre l'élément de guidage (74) et l'âme de cisaillement (55), et
abaisser lesdites une ou plusieurs âmes de cisaillement dans la première moitié de coque de telle sorte que l'extrémité libre (81) du cadre de support (80) est reçue dans l'espace de réception (88) entre l'élément de guidage (74) et l'âme de cisaillement (55).

2. Procédé de fabrication d'une pale d'éolienne selon la revendication 1, dans lequel l'élément de guidage (74) forme un angle aigu (α) avec la surface latérale (68) de l'âme de cisaillement.

3. Procédé de fabrication d'une pale d'éolienne selon la revendication 2, dans lequel l'angle aigu (α) est compris entre 10 et 60°.

4. Procédé de fabrication d'une pale d'éolienne selon l'une quelconque des revendications précédentes, dans lequel les points d'ancrage (86) sur la surface intérieure de la première moitié de coque sont situés à moins de 20 % de distance de corde (c1) à partir de soit le bord d'attaque, soit le bord de fuite de la première moitié de coque.

5. Procédé de fabrication d'une pale d'éolienne selon l'une quelconque des revendications précédentes, dans lequel l'élément de guidage (72a) a une étendue (90) dans le sens de l'envergure allant de 25 à 250 mm, de préférence de 50 à 100 mm.

6. Procédé de fabrication d'une pale d'éolienne selon l'une quelconque des revendications précédentes, dans lequel l'étape consistant à attacher au moins un élément de guidage sur au moins l'une des surfaces latérales de l'âme de cisaillement comporte l'étape consistant à attacher de 2 à 10, de préférence de 4 à 6, éléments de guidage sur au moins l'une des surfaces latérales de l'âme de cisaillement, les éléments de guidage étant agencés successivement dans la direction allant dans le sens de l'envergure.

7. Procédé de fabrication d'une pale d'éolienne selon l'une quelconque des revendications précédentes, dans lequel l'extrémité libre (81) du cadre de support est une extrémité arrondie destinée à être reçue de manière coulissante dans l'espace de réception entre l'élément de guidage et l'âme de cisaillement.

8. Procédé de fabrication d'une pale d'éolienne selon l'une quelconque des revendications précédentes, dans lequel l'extrémité libre (81) du cadre de support comporte une broche de guidage correspondant à la forme de l'espace de réception entre l'élément de guidage et l'âme de cisaillement.

9. Procédé de fabrication d'une pale d'éolienne selon l'une quelconque des revendications précédentes, dans lequel une première âme de cisaillement (50) et une deuxième âme de cisaillement (55) sont agencées à l'intérieur de la première moitié de coque, la première âme de cisaillement et la deuxième âme de cisaillement étant interconnectées de manière amovible par une ferme (70) placée entre la première âme de cisaillement et la deuxième âme de cisaillement.

10. Procédé de fabrication d'une pale d'éolienne selon l'une quelconque des revendications précédentes, dans lequel ledit au moins un élément de support (78, 80) et la ferme (70) sont retirés après avoir assemblé de manière adhésive la deuxième moitié de coque à la première moitié de coque et auxdites une ou plusieurs âmes de cisaillement.

11. Procédé de fabrication d'une pale d'éolienne selon l'une quelconque des revendications précédentes, dans lequel l'élément de guidage s'étend latéralement à partir de l'âme de cisaillement dans les limites d'une distance de corde (c2) allant de 5 à 200 mm, de préférence de 5 à 100 mm.

12. Procédé de fabrication d'une pale d'éolienne selon l'une quelconque des revendications précédentes, dans lequel l'élément de guidage a un poids total de moins de 10 % par rapport au poids de l'âme de cisaillement.

13. Procédé de fabrication d'une pale d'éolienne selon l'une quelconque des revendications précédentes, dans lequel lesdits un ou plusieurs points d'ancrage sur la surface intérieure de la première moitié de coque comportent une ancre polymère collée sur la surface intérieure de la première moitié de coque, l'ancre polymère comportant une boucle servant à recevoir une broche d'accouplement du cadre de support.

14. Ensemble formant âme de cisaillement (92) pour une pale d'éolienne, la pale (10) ayant un contour profilé comprenant un côté en pression et un côté en dépression, et un bord d'attaque (18) et un bord de fuite (20) avec une corde ayant une longueur de corde s'étendant entre eux, la pale d'éolienne (10) s'étendant dans une direction allant dans le sens de l'envergure entre une extrémité de pied (16) et une extrémité de bout (14), ledit ensemble formant âme de cisaillement comportant :
une ou plusieurs âmes de cisaillement (50, 55), chaque âme de cisaillement comportant deux surfaces latérales opposées (66, 68) s'étendant dans une direction allant dans le sens de l'envergure, **caractérisé en ce que** l'ensemble formant âme de cisaillement comporte par ailleurs
au moins un élément de guidage (72, 74) attaché sur au moins l'une des surfaces latérales de l'âme de cisaillement de telle sorte que l'élément de guidage s'étend latéralement à partir de l'âme de cisaillement pour former un espace de réception (88) entre l'élément de guidage et l'âme de cisaillement,
dans lequel l'élément de guidage a un poids total de moins de 10 % par rapport au poids de l'âme de cisaillement.

15. Ensemble formant âme de cisaillement pour une pale d'éolienne selon la revendication 14, comportant 2 à 10, de préférence 4 à 6, éléments de guidage attachés sur au moins l'une des surfaces latérales de l'âme de cisaillement, les éléments de guidage étant agencés successivement dans la direction allant dans le sens de l'envergure.
